# EUROPÄISCHE PATENTSCHRIFT

(11) **EP 0 407 794 B1**
(45) Veröffentlichungstag und Bekanntmachung des Hinweises auf die Patenterteilung: **19.10.1994**
(21) Anmeldenummer: 90111986.7
(22) Anmeldetag: 25.06.1990
(51) Int. Cl.: B23Q 39/04, B23P 23/02

(54) **Werkzeugmaschine mit einem Drehtisch und drehbaren Halteeinrichtungen**
Machine tool with rotating table and rotating workholders
Machine-outil avec table tournante et portes-pièces rotatifs

(30) Priorität: 14.07.1989 DE 3923230
(43) Veröffentlichungstag der Anmeldung: 16.01.1991
(73) Patentinhaber: HECKERT CHEMNITZER WERKZEUGMASCHINEN GmbH, D-09117 Chemnitz (DE)
(72) Erfinder: Klett, Manfred, D-7149 Freiberg (DE); Dreimann, Markus, D-7250 Leonberg (DE); Baumer, Dieter, D-7250 Leonberg (DE)
(74) Vertreter: Hoeger, Stellrecht & Partner

(56) Entgegenhaltungen:
- GB-A- 1 237 456

## Beschreibung

Die Erfindung betrifft eine Werkzeugmaschine mit einem Maschinengestell, mit einem um eine Mittelachse drehbar am Maschinengestell gelagerten Drehtisch, mit um den Drehtisch herum im Winkelabstand angeordneten Bearbeitungsstationen, mit mindestens einer am Drehtisch um eine Drehachse drehbar gelagerten Halteeinrichtung, welche durch Drehen des Drehtisches in die Bearbeitungsstationen bringbar ist und mit einem Drehantrieb zum Verdrehen der Halteeinrichtungen in verschiedene Drehstellungen.

Eine derartige Werkzeugmaschine ist aus dem Stand der Technik bekannt. Bei dieser wird die Halteeinrichtung über ein Ritzel angetrieben, welches in ein Zahnsegment eingreift, wobei das Zahnsegment je nach der zu erreichenden Drehstellung der Halteeinrichtung unterschiedlich lang ausgebildet ist. Der Nachteil dieses Antriebs für die Halteeinrichtungen ist darin zu sehen, daß beim Einfahren des Ritzels in das Zahnsegment erhebliche Schlagbeanspruchungen auf das Ritzel wirken und daher der Drehtisch nicht mit einer hohen Geschwindigkeit gedreht werden kann.

Der Erfindung liegt daher die Aufgabe zugrunde, einen Drehtisch der gattungsgemäßen Art derart zu verbessern, daß der Drehtisch mit möglichst großer Geschwindigkeit gedreht werden kann, und unabhängig davon während der Drehung des Drehtischs von Bearbeitungsstation zu Bearbeitungsstation ein Verdrehen der Halteeinrichtung um beliebig kleine oder beliebig große Winkel möglich ist.

Diese Aufgabe wird bei einer Werkzeugmaschine der eingangs beschriebenen Art erfindungsgemäß dadurch gelöst, daß der Drehantrieb eine erste und eine zweite, stationär am Maschinengestell gehaltene Nockenkurve sowie ein erstes und ein zweites am Drehtisch gelagertes und sich bei dessen Drehung längs der Nockenkurve bewegendes Nockenelement umfaßt, daß jeweils die erste Nockenkurve in einer ersten Fläche und die zweite Nockenkurve in einer zweiten Fläche liegen, daß die erste Nockenkurve mit einer ersten Nockenfläche des ersten Nockenelements sowie die zweite Nockenkurve mit einer zweiten Nockenfläche des zweiten Nockenelements in ständigem Kontakt miteinander zusammenwirken, daß das erste und das zweite Nockenelement zum Drehen der Halteeinrichtung gekoppelt sind und diese in jeder ihrer Positionen längs der Nockenkurven in einer eindeutig definierten Drehstellung halten, und daß die Nockenelemente und die Nockenbahnen so angeordnet sind, daß ein Zugriff des einen Nockenelements zu dessen Nockenkurve berührungsfrei mit der Nockenkurve des anderen Nockenelements oder mit dessen Zugriff mit dieser Nockenkurve erfolgt.

Der Vorteil der erfindungsgemäßen Lösung ist darin zu sehen, daß durch die Verwendung von Nockenkurven anstelle von Zahnsegmenten diese so ausgebildet sein können, daß keine Schlagbeanspruchungen mehr auftreten, da sich durch die Nockenkurven die Drehbewegungen der Halteeinrichtung mit der gewünschten Beschleunigung und somit nicht schlagartig einleiten lassen.

Besonders durch die Tatsache, daß der Zugriff des einen Nockenelements zu dessen Nockenkurve berührungsfrei mit der Nockenkurve des anderen Nockenelements oder mit dessen Zugriff zu dieser Nockenkurve erfolgt, ist sichergestellt, daß die Abtastung der ersten und der zweiten Nockenkurve durch das erste und das zweite Nockenelement unabhängig voneinander erfolgen kann und somit eine definierte Führung jedes einzelnen Nockenelements an der jeweiligen Nockenkurve und folglich auch eine definierte Festlegung der Drehstellung der Halteeinrichtung möglich ist.

Als besonders vorteilhaft im Rahmen der vorliegenden Erfindung hat es sich erwiesen, wenn die erste und die zweite Fläche parallel zueinander verlaufen. Dabei können die erste und die zweite Fläche im einfachsten Fall in einer Ebene liegen. Besonders vorteilhaft ist es jedoch in diesem Zusammenhang, wenn die erste und die zweite Fläche übereinanderliegend angeordnet sind.

Hinsichtlich der Achsen, um die sich die Nockenelemente drehen, ist es besonders vorteilhaft, wenn sich das erste und das zweite Nockenelement um senkrecht auf der ersten bzw. zweiten Fläche stehende Achsen drehen.

Vorzugsweise sind dabei die Achsen mehrzählige Rotationssymmetrieachsen für das jeweilige Nockenelement.

Die Symmetrie des Nockenelements kann mehrzählig sein. Besonders günstig ist es jedoch, wenn die Achse eine zweizählige Rotationssymmetrieachse für das jeweilige Nockenelement ist.

Insbesondere aus Gründen der Einfachheit hat es sich als zweckmäßig erwiesen, wenn das erste und das zweite Nockenelement identische Symmetrieeigenschaften aufweisen.

Die Nockenelemente können beispielsweise so angeordnet sein, daß ihre Achsen parallel und im Abstand voneinander angeordnet sind. Besonders einfach und zweckmäßig ist jedoch eine konstruktive Lösung, bei welcher die Nockenelemente auf einem einzigen Antriebsteil des Drehantriebs sitzen. Hierbei hat es sich, insbesondere um einen unabhängigen Zugriff der einzelnen Nockenelemente zu den Nockenkurven zu gewährleisten, als zweckmäßig erwiesen, wenn die Nockenelemente in axialer Richtung des Antriebsteils im Abstand voneinander angeordnet sind.

Bezüglich der Anordnung der Nockenelemente relativ zueinander ist es, um eine eindeutige Definition der Drehstellung der Halteeinrichtung zu gewährleisten, am vorteilhaftesten, wenn die Nockenelemente gegeneinander versetzt an dem Antriebsteil gehalten sind. Insbesondere ist es vorteilhaft, wenn die Nockenelemente gegeneinander auf Lücke versetzt an dem Antriebsteil angeordnet sind, wobei vorzugsweise ein Versatz um 90° bei Nockenelementen mit zweizähliger Symmetrieachse vorgesehen ist.

Die Nockenelemente können grundsätzlich beliebig ausgebildet sein. So ist es möglich, daß die Nockenelemente einen einzigen Nockenkörper aufweisen, welcher auf den Nockenkurven läuft. Besonders zweckmäßig aus Gründen der Laufeigenschaften ist es jedoch, wenn die Nockenelemente mit Rollen auf den diesen zugeordneten Nockenkurven laufen.

Bei den bislang beschriebenen Ausführungsbeispielen wurde noch nicht näher darauf eingegangen, wie die Nockenkurven ausgebildet sein sollen. So ist es besonders vorteilhaft, wenn die Nockenkurven konzentrisch um die Mittelachse herum verlaufen. Im einfachsten Fall einer erfindungsgemäßen Werkzeugmaschine verlaufen die Nockenkurven dabei rings um die Mittelachse herum.

Die Nockenkurven könnten so ausgebildet sein, daß sich die Nockenelemente zwischen zwei Führungsflächen eingeschlossen führen. Eine konstruktiv bevorzugte Lösung sieht vor, daß die Nockenkurven auf einer Seite der Nockenelemente, vorzugsweise auf der der Mittelachse zugewandten Seite derselben, verlaufen und damit nur ständig einseitig an den Nockenelementen anliegen.

Um ein möglichst einfaches Auswechseln der Nockenkurven zu ermöglichen, ist vorgesehen, daß die Nockenkurven in von einer Bearbeitungsstation zur nächsten Bearbeitungsstation reichenden Winkelsegmente unterteilt sind. Die Bogenlänge der Winkelsegmente der Nockenkurven und damit auch der Winkelabstand aufeinanderfolgender Bearbeitungsstationen sind vorzugsweise so bemessen, daß die Bogenlänge mindestens einem halben Abrollumfang der Nockenelemente auf den Nockenkurven entspricht. Noch besser ist es, wenn die Bogenlänge mindestens einem Abrollumfang entspricht.

Besonders vorteilhaft läßt sich die erfindungsgemäße Werkzeugmaschine dadurch ausbilden, daß die Nockenelemente beim Durchlaufen unterschiedlicher Winkelsegmente die Halteeinrichtung um unterschiedliche Drehwinkel drehen, so daß je nach Art der einzelnen Bearbeitungsstation eine unterschiedliche Drehstellung der Halteeinrichtung von Bearbeitungsstation zu Bearbeitungsstation möglich ist.

Besonders zweckmäßig ist es hierbei, wenn die Nockenelemente die Drehwelle bei Durchlaufen eines Winkelsegments um ein N-Faches eines Winkelinkrements drehen, wobei dieses Winkelinkrement die kleinste Winkeleinheit darstellt, um die eine Drehung des Nockenelements möglich ist.

Insbesondere dann, wenn große Beschleunigungen des Drehtisches und somit eine schnelle Drehung desselben erfolgen sollen, hat es sich als zweckmäßig erwiesen, wenn die Nockenkurven so ausgebildet sind, daß die Nockenelemente die Antriebswelle während des gesamten Durchlaufens eines Winkelsegments drehen, da in diesem Fall die Winkelbeschleunigung der Halteeinrichtung auf einem Minimum gehalten werden kann, da das gesamte Winkelsegment zur Verfügung steht, um die Halteeinrichtung weiterzudrehen.

Besonders einfach und zweckmäßig lassen sich die Nockenkurven dann ausbilden, wenn der Drehantrieb während des Durchlaufens jedes Winkelsegments ein konstantes Übersetzungsverhältnis zwischen einer Drehung des Drehtisches und der Halteeinrichtung herstellt, da dann die Nockenkurven innerhalb jedes Winkelsegments als Ausschnitt aus einem periodischen Kurvenzug ausgebildet sein können, wobei es problemlos möglich ist, die Übersetzungsverhältnisse in einzelnen Winkelsegmenten unterschiedlich zu wählen, um die Halteeinrichtung in den unterschiedlichen Winkelsegmenten um unterschiedliche Drehwinkel zu drehen.

Bei den vorhergehenden Ausführungen wurden hinsichtlich der Form der Nockenkurven keine näheren Angaben gemacht. Insbesondere bei Nockenelementen mit einer zweizähligen Symmetrieachse, welche gegeneinander um 90° versetzt sind, ist es vorteilhaft, wenn die Nockenkurven so ausgebildet sind, daß sie in Bereichen ihres minimalen Abstands von einer Achse des jeweiligen Nockenelements dieses Nockenelement an zwei längs der Nockenkurve im Abstand voneinander angeordneten Punkten abstützen, während das jeweils andere Nockenelement in einem Punkt an der anderen Nockenkurve anliegt, welche den maximalen Abstand von der Achse des anderen Nockenelements aufweist. Damit ist sichergestellt, daß die eindeutig definierte Drehstellung der Halteeinrichtung durch das mit zwei Punkten auf der Nockenkurve anliegende eine Nockenelement definiert ist, da das andere Nockenelement, das an der anderen Nockenkurve mit maximalem Abstand von der Drehachse desselben anliegt, keine eindeutige Drehstellung der Halteeinrichtung definieren könnte.

Ein bevorzugtes Ausführungsbeispiel der erfindungsgemäßen Lösung sieht vor, daß die Nockenelemente so ausgebildet sind, daß bei entsprechend ausgebildeten Nockenkurven eine Drehung der Halteeinrichtung im Bereich von 0° bis mindestens 360° möglich ist.

Ferner ist es zweckmäßig, wenn die Nockenelemente bei einem Umlauf auf den Nockenkurven die Drehwelle in einer einzigen Richtung drehen.

Bezüglich der Nockenkurven ist, um die unterschiedlichsten Bearbeitungszyklen mit der erfindungsgemäßen Werkzeugmaschine durchführen zu können, bei einem Ausführungsbeispiel vorgesehen, daß diese auswechselbar am Maschinengestell gehalten sind. Besonders vorteilhaft ist es dabei, wenn die erste und die zweite Nockenkurve einzeln am Maschinengestell gehalten sind, so daß diese sich auswechseln lassen, ohne die Halteeinrichtung und die damit zusammenhängenden Nockenelemente auswechseln zu müssen.

Die Umrüstung einer erfindungsgemäßen Werkzeugmaschine läßt sich besonders einfach dann durchführen, wenn die Nockenkurven in den Winkelsegmenten entsprechende Kurvensegmente unterteilt sind.

In Ergänzung der vorliegenden erfindungsgemäßen Werkzeugmaschine hat es sich als besonders vorteilhaft erwiesen, wenn die Halteeinrichtung mit einer Indexiervorrichtung versehen ist, mit welcher die Halteeinrichtung in einer Vielzahl von Drehstellungen festlegbar ist, welche durch ein Vielfaches eines Winkelinkrements definiert sind. Dieses Winkelinkrement beträgt beispielsweise 7,5°. Der Vorteil einer derartigen Indexiervorrichtung ist darin zu sehen, daß der Drehantrieb für die Halteeinrichtungen weniger präzise ausgebildet sein kann und dennoch stets eine präzise definierte Drehstellung der Halteeinrichtung in der jeweiligen Bearbeitungsposition erreichbar ist.

Diese Indexiervorrichtung ist zweckmäßigerweise so ausgebildet, daß sie einen mit der Haltevorrichtung drehfest verbundenen Indexierring aufweist, welcher mit einer am Drehantrieb gehaltenen Indexierverrastung zusammenwirkt.

Vorteilhafterweise ist die Indexierverrastung ein Hebel mit einer in den Indexierring federbeaufschlagt eingreifenden Rastnase, wobei insbesondere vorgesehen ist, daß die Rastnase eine Vorfixierung der Haltevorrichtung in ihrer jeweiligen Drehstellung bewirkt.

Darüberhinaus ist es zweckmäßig, wenn die Indexiervorrichtung eine Genaupositionierung der Haltevorrichtung in den Bearbeitungsstationen aufweist.

Diese Genaupositionierung umfaßt zweckmäßigerweise Positionierklauen, welche mit dem Indexierring in Eingriff bringbar sind. Eine besonders bevorzugte Lösung sieht dabei vor, daß die Positionierklauen maschinengesteuert mit dem Indexierring in Eingriff bringbar sind. Der Begriff "maschinengesteuert" ist dabei so zu verstehen, daß die Steuerung der Positionierklauen mit der Steuerung unmittelbar erfolgt, welche für die Steuerung des Drehtisches verantwortlich ist, und daß nicht erst über eine Drehbewegung des Drehtisches ein Lösen oder ein Ineingriffbringen der Positionierklauen erfolgt.

Eine besonders bevorzugte Variante der erfindungsgemäßen Werkzeugmaschine sieht dabei vor, daß die Positionierklauen durch eine am Maschinengestell fest angeordnete Betätigungseinrichtung mit dem Indexierring in Eingriff bringbar sind.

Diese Betätigungseinrichtung ist in einfachster Weise als eine hydraulische Betätigungseinrichtung ausgebildet.

Vorzugsweise ist dabei vorgesehen, daß jeder Bearbeitungsstation eine derartige Betätigungseinrichtung für die Genaupositionierung zugeordnet ist.

Eine erfindungsgemäß besonders vorteilhafte Kombination einer Indexierverrastung mit einer Genaupositionierung sieht vor, daß die Positionierklauen an dem die Rastnase tragenden Hebel angeordnet sind. Dieser Hebel ist zweckmäßigerweise so ausgebildet, daß die Rastnase oder die Positionierklauen mit dem Indexierring in Eingriff bringbar sind.

Damit ist, bei hydraulischer Betätigung, auch gleichzeitig sichergestellt, die Indexierverrastung durch die gesteuerte Betätigung der Positionierklauen aufhebbar oder zuschaltbar ist.

Um eine exakte Positionierung der Halteeinrichtung relativ zum Drehtisch zu gewährleisten, ist vorteilhafterweise vorgesehen, daß die Genaupositionierung am Drehtisch gelagert ist und lediglich die Betätigung über die fest am Maschinengestell angeordnete Betätigungseinrichtung erfolgt.

In gleicher Weise ist es vorteilhaft, insbesondere um eine Verrastung der Halteeinrichtung in ihren einzelnen Drehstellungen auch zwischen den Bearbeitungsstationen aufrechtzuerhalten, wenn die Indexierverrastung an dem Drehtisch gehalten ist.

Ein Ausführungsbeispiel der erfindungsgemäßen Werkzeugmaschine ist so ausgebildet, daß die Bearbeitungsstationen in gleichen Winkelabständen angeordnet sind.

Ferner ist vorgesehen, daß in den Bearbeitungsstationen Bearbeitungseinrichtungen angeordnet sind. Um nun eine exakte Ausrichtung der Bearbeitungseinrichtungen relativ zur jeweiligen Halteeinrichtung in der jeweiligen Bearbeitungsstation herbeiführen zu können, ist vorgesehen, daß die Bearbeitungseinrichtungen um eine Drehachse der in der jeweiligen Bearbeitungsstation stehenden Halteeinrichtung verschwenkbar am Maschinengestell angeordnet sind.

In dem schwenkbaren Anordnen der Bearbeitungseinrichtungen um die Drehachse der Halteeinrichtung in der jeweiligen Bearbeitungsstation ist in Verbindung mit einer Werkzeugmaschine der eingangs beschriebenen Art ein selbständiger Erfindungsgedanke zu sehen, insbesondere in Verbindung mit der Indexiervorrichtung, welche eine Genaupositionierung und gegebenenfalls auch eine Vorpositionierung der Halteeinrichtung um festgelegte Winkelinkremente ermöglicht. Durch die Kombination dieser Indexiervorrichtung mit den schwenkbar angeordneten Bearbeitungseinrichtungen ist somit die Möglichkeit gegeben, die relative Orientierung zwischen den Bearbeitungseinrichtungen und der Halteeinrichtung in der jeweiligen Bearbeitungsstation stufenlos in beliebigen Winkel zwischen 0° und 360° bei einer Werkzeugmaschine der eingangs beschriebenen Art einzustellen.

Besonders zweckmäßig ist es hierbei, wenn die Bearbeitungseinrichtung eine Arbeitsachse aufweist, die parallel zu einer radialen Richtung zur Drehachse der in der jeweiligen Bearbeitungsstation stehenden Halteeinrichtung verläuft.

Das einfachste diesbezügliche Ausführungsbeispiel einer Werkzeugmaschine sieht dabei vor, daß die Arbeitsachse in radialer Richtung zur Drehachse der in der jeweiligen Bearbeitungsstation stehenden Halteeinrichtung verläuft.

Die einfachste konstruktive Lösung einer derartigen schwenkbaren Lagerung der Bearbeitungseinrichtung sieht dabei vor, daß die Bearbeitungseinrichtung mit einem koaxial zur Drehachse der in der jeweiligen Bearbeitungsstation stehenden Halteeinrichtung angeordneten Drehlager am Maschinengestell gehalten ist.

Ferner ist es zur weiteren Abstützung der Bearbeitungseinrichtung von Vorteil, wenn diese auf einem radial außenliegend zum Drehtisch angeordneten Befestigungsbett aufsitzt.

Vorzugsweise weist dabei das Befestigungsbett eine quer zur Drehachse der in der jeweiligen Bearbeitungsstation stehenden Halteeinrichtung ausgerichtete Bettebene auf.

Zur Befestigung der Bearbeitungseinrichtung ist ferner vorgesehen, daß das Befestigungsbett verstellbare Befestigungselemente für die Bearbeitungseinrichtung aufweist.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: eine Frontansicht eines Ausführungsbeispiels einer erfindungsgemäßen Werkzeugmaschine;
- Fig. 2: eine Ansicht von oben auf die Werkzeugmaschine in Fig. 1;
- Fig. 3: einen Schnitt längs Linie 3-3 in Fig. 2;
- Fig. 4: einen Schnitt längs Linie 4-4 in Fig. 2;
- Fig. 5: einen Schnitt längs Linie 5-5 in Fig. 4 unter bloßer Darstellung von Nockenkurven und Nockenelementen, hier eine 90°-Drehung;
- Fig. 6: einen Schnitt ähnlich Fig. 5 für eine 360°-Drehung;
- Fig. 7: einen Schnitt längs Linie 7-7 in Fig. 4;
- Fig. 8: eine ausschnittsweise Draufsicht ähnlich Fig. 2 mit weggelassenem Werkstückträger.

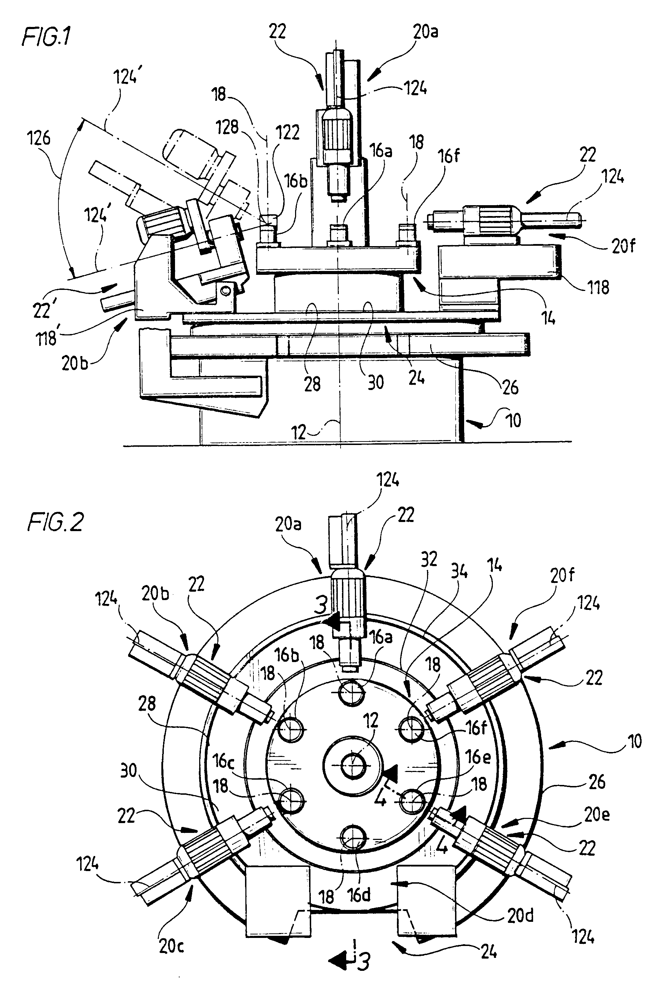

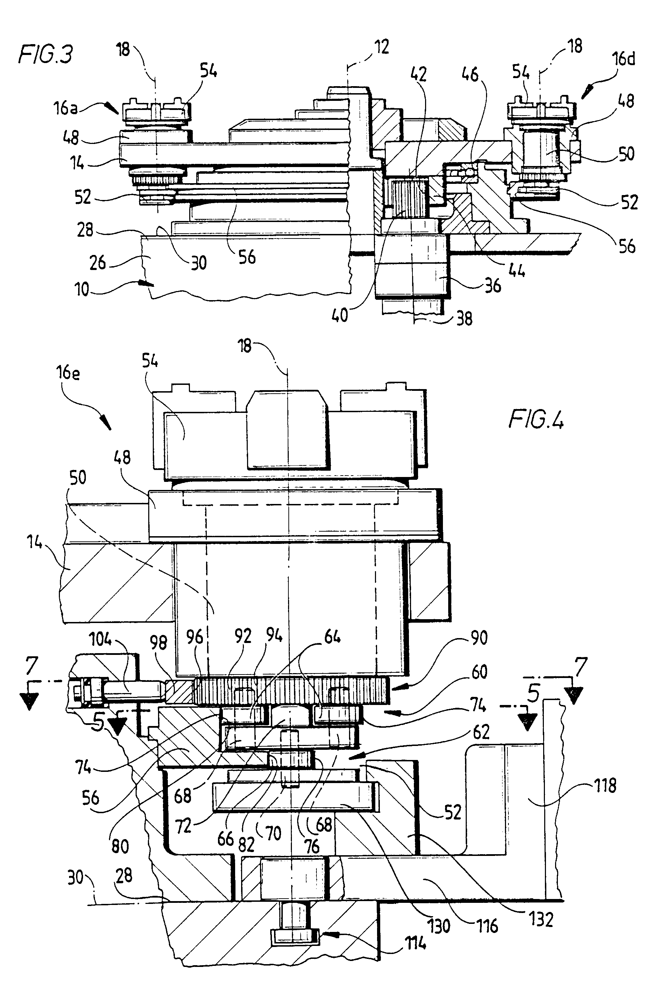

Ein Ausführungsbeispiel einer erfindungsgemäßen Werkzeugmaschine, dargestellt in Fig. 1, umfaßt ein Maschinengestell 10, an welchem um eine Mittelachse 12 drehbar ein als Ganzer mit 14 bezeichneter Drehtisch gelagert ist.

An dem Drehtisch selbst sind, wie insbesondere auch aus Fig. 2 zu ersehen, in gleichen Winkelabständen eine Vielzahl, beim dargestellten Ausführungsbeispiel insgesamt sechs, Werkstückträger 16 als Halteeinrichtungen vorgesehen, welche ihrerseits jeweils um eine Drehachse 18 relativ zu dem Drehtisch 14 drehbar sind. Vorzugsweise sind die Werkstückträger 16 identisch ausgebildet und ihre Drehachse 18 ist konzentrisch zu diesem angeordnet. Außerdem liegen vorzugsweise alle Drehachsen 18 auf demselben Radiusabstand von der Mittelachse 12 und sind bezogen auf die Mittelachse 12 in gleichen Winkelabständen angeordnet.

Die Werkstückträger 16 sind durch den Drehtisch 14 in verschiedene Bearbeitungsstationen 20a bis f bringbar, welche relativ zum Maschinengestell fest angeordnet sind. Hierzu ist zunächst, wie in Fig. 2 exemplarisch dargestellt, der Werkstückträger 16a in der Bearbeitungsstation 20a positioniert, der Werkstückträger 16b der Bearbeitungsstation 20b usw. Anschließend wird der Drehtisch 14 durch einen später noch zu beschreibenden Antrieb um einen Winkel gedreht, welcher dem Winkelabstand der Werkstückträger 16a, 16b etc. entspricht, so daß in der nächsten Stellung der Werkstückträger 16a in der Bearbeitungsstation 20b, der Werkstückträger 16b in der Bearbeitungsstation 20c usw. steht.

In jeder dieser Bearbeitungsstationen 20a bis f ist entweder eine Bearbeitungseinrichtung 22 angeordnet oder eine Werkstückzufuhr 24 vorgesehen, welche, wie in Fig. 2 dargestellt, im einfachsten Fall manuell oder aber auch automatisch durch entsprechende Werkstückzufuhreinrichtungen erfolgen kann.

Die Bearbeitungseinrichtungen 22 sind hierzu auf einem um den Drehtisch 14 herumlaufenden Unterbau 26 angeordnet, welcher Teil des Maschinengestells 10 ist und ein Befestigungsbett 28 bildet, auf welchem, die einzelnen Bearbeitungseinrichtungen 22 montierbar sind. Dieses Befestigungsbett 28 definiert eine Bettebene 30, welche quer zur Mittelachse 12 verläuft, vorzugsweise senkrecht zu dieser, so daß eine definierte Positionierung aller Bearbeitungseinrichtungen 22 möglich ist. Zur Befestigung der Bearbeitungseinrichtungen 22 verlaufen konzentrisch zur Mittelachse 12 in dem Befestigungsbett 28 T-Nuten 32 und 34, in welchen mit entsprechenden Befestigungseinrichtungen, z.B. Nutensteinen 112, die Bearbeitungseinrichtungen 22 verankert sind.

Der Antrieb des Drehtisches 14 erfolgt - wie in Fig. 3 dargestellt - durch einen Motor 36, dessen Motorachse 38 parallel zur Mittelachse 12 ausgerichtet ist und dessen Motorwelle mit einem Ritzel 40 versehen ist, welches in eine Innenverzahnung 42 eines Hohlrades 44 eingreift, das seinerseits an einer Unterseite des Drehtisches 14 an diesem befestigt ist. Der Motor 36 ist hierzu stationär am Maschinengestell 10 gehalten.

Die Lagerung des Drehtisches 14 an dem Maschinengestell 10 erfolgt über ein vom Maschinengestell 10 getragenes Tischlager 46, welches ebenfalls an der Unterseite des Drehtisches 14 im Bereich des Hohlrades 44 angreift.

Die Werkstückträger 16 sind drehbar in einer fest mit dem Drehtisch 14 verbundenen und diesen von seiner Oberseite zu seiner Unterseite durchdringenden Buchse 48 gehalten, wobei sie einen in der Buchse 48 liegenden Lagerkörper 50 aufweisen, der sich durch die gesamte Buchse hindurch erstreckt und einen unterhalb des Drehtisches 14 liegenden Antriebskopf 52 trägt. Über dem Drehtisch 14 ist ein Spannkopf 54 des Werkstückträgers 16 vorgesehen, welcher ebenfalls vom Lagerkörper 50 getragen und mit diesem fest verbunden ist. In diesem Spannkopf 54 können Werkstücke, je nach Ausbildung desselben, auf unterschiedlichste Art und Weise gespannt werden.Der Antriebskopf 52 des Werkstückträgers 16 wird angetrieben durch einen stationär am Maschinengestell 10 gehaltenen, um die Mittelachse 12 verlaufenden Antriebskranz 56, welcher vorzugsweise radial außenliegend zum Hohlrad 44 angeordnet ist. Der Antriebskopf 52 und der Antriebskranz 56 bilden gemeinsam einen Drehantrieb für den Werkstückträger 16.

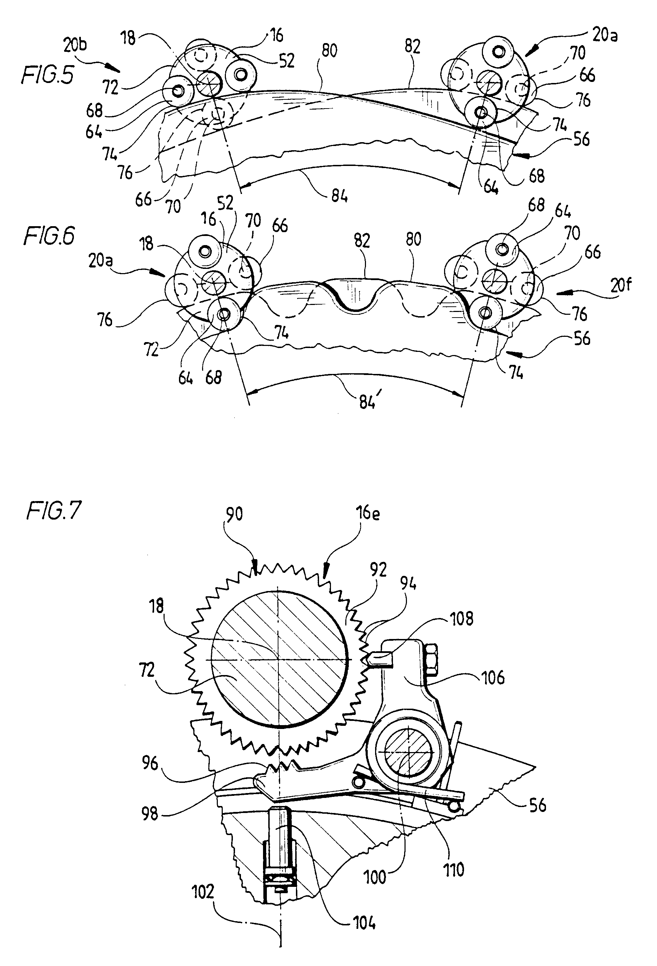

Wie in Fig. 4 und 5 zu ersehen, umfaßt der Antriebskopf 52 ein erstes Nockenelement 60 und ein zweites in Richtung der Drehachse 18 im Abstand unterhalb des ersten Nockenelements 60 angeordnetes Nockenelement 62. Jedes der Nockenelemente 60, 62 weist dabei zwei im selben radialen Abstand von der Drehachse 18 und einander gegenüberliegend angeordnete Rollen 64 bzw. 66, welche jeweils zusammen das erste Nockenelement 60 bzw. das zweite Nockenelement 62 bilden. Vorzugsweise sind die Rollen 64 und 66 durch Bolzen 68 bzw. 70 an einem gemeinsamen Antriebskopfkörper 72 gelagert, wobei die Rollen 64 bzw. 66 um ihre jeweiligen Bolzen 68 bzw. 70 drehbar sind. Die die Drehachsen der Rollen 64 bzw. 66 festlegenden Bolzen 68 bzw. 70 erstrecken sich dabei parallel zur Drehachse 18 und diese erstreckt sich vorzugsweise parallel zur Mittelachse 12.

Die Rollen 64 bzw. 66 sind zylindrisch ausgebildet und bilden mit ihrer Zylindermantelfläche 74 bzw. 76 erste und zweite Nockenflächen, welche parallel zur Achse der Bolzen 68 bzw. 70 stehen.

Der Antriebskranz umfaßt eine erste Nockenkurve 80 und eine zweite Nockenkurve 82, wobei die erste Nockenkurve 80 mit dem ersten Nockenelement 60 zusammenwirkt und die zweite Nockenkurve 82 mit dem zweiten Nockenelement 62. Aus diesem Grund weisen die erste Nockenkurve 80 und die zweite Nockenkurve 82 einen Abstand in Richtung der Drehachse voneinander auf, welcher dem zwischen dem ersten Nockenelement 60 und dem zweiten Nockenelement 62 entspricht. Die erste und die zweite Nockenkurve 80 bzw. 82 erstrecken sich dabei in zwei zueinander parallelen Ebenen und jeweils in radialer Richtung zur Mittelachse 12 und somit auch in Richtung senkrecht zur Drehachse 18 des Werkstückträgers 16 mit variierendem radialem Abstand von der Drehachse 18 und somit auch von der Mittelachse 12.

Die erste und die zweite Nockenkurve 80 bzw. 82 bilden gemeinsam mit dem ersten und dem zweiten Nockenelement 60 bzw. 62 den Drehantrieb für den Werkstückträger 16, welcher ein konstantes Übersetzungsverhältnis zwischen der Drehung des Drehtisches 14 und der Drehung des Werkstückträgers 16 vermittelt und außerdem den Werkstückträger 16 in jeder Position längs der Nockenkurven 80 bzw. 82 in einer eindeutig definierten Drehstellung hält. Hierzu sind die Nockenelemente 60 bzw. 62 relativ zueinander um 90° versetzt am Antriebskopfkörper 72 angeordnet, d.h., daß die Verbindungslinien zwischen den Bolzen 68 bzw. 70 miteinander einen Winkel von 90° einschließen. Die Nockenkurven 80 bzw. 82 variieren mit ihrem radialen Abstand von der Drehachse 18 mit derselben Periodizität, da das erste und das zweite Nockenelement 60 bzw. 62 identisch ausgebildet sind, jedoch mit einer Phasenverschiebung von 180°. Ferner sind die Nockenkurven 80 bzw. 82 so geformt, daß zumindest immer eine der Rollen 64 des ersten Nockenelements 60 und eine der Rollen 66 des zweiten Nockenelements 62 mit ihrer Nockenfläche 74 bzw. 76 an der entsprechenden Nockenkurve 80 bzw. 82 anliegt, so daß die Drehstellung des Antriebskopfes 52 stets sowohl durch das erste Nockenelement 60 als auch durch das zweite Nockenelement 62 und die entsprechenden Nockenkurven 80 bzw. 82 in einer definierten Position gehalten ist.

Die sich daraus ergebende Funktion des Drehantriebs ist in Fig. 5 dargestellt, wobei Fig. 5 beispielhaft einen Ausschnitt der Nockenkurven 80 bzw. 82 zeigt, wie er sich zwischen den Bearbeitungsstationen 20a und 20b erstreckt, sowie die entsprechende Stellung der Nockenelemente 60, 62.

In der Bearbeitungsstation 20a weist die erste Nockenkurve 80 den maximalen radialen Abstand von der Drehachse 18 auf und somit liegt das erste Nockenelement 60 mit einer Rolle 64 an der ersten Nockenkurve 80 an, wobei die Verbindungslinie zwischen den Bolzen 68 des ersten Nockenelements 60 senkrecht auf der ersten Nockenkurve 80 steht. Das um 90° gegenüber dem ersten Nockenelement 60 verdrehte zweite Nockenelement 62 ist mit der Verbindungsachse zwischen den Bolzen 70 so orientiert, daß diese senkrecht auf der Verbindungslinie der Bolzen 68 steht. Das zweite Nockenelement 62 liegt dabei mit beiden Rollen 66 auf der zweiten Nockenkurve 82 an, um die Drehstellung des Antriebskopfes 52 eindeutig festzulegen, da durch die an der ersten Nockenkurve 80 anliegende Rolle 64 und eine an der zweiten Nockenkurve 82 anliegende Rolle 66 eine eindeutige Festlegung der Drehstellung des Antriebskopfes 52 nicht möglich wäre. Die zweite Nockenkurve 82 hat somit in der Bearbeitungsposition 20a den geringsten radialen Abstand von der Drehachse 18, wobei sie eine derartige Form aufweist, daß, wie bereits beschrieben, beide Rollen 66 auf dieser aufliegen.

Von der Bearbeitungsposition 20a bis zur Bearbeitungsposition 20b verläuft die erste Nockenkurve 80 vom maximalen radialen Abstand von der Drehachse 18 bis zum minimalen radialen Abstand der Drehachse 18 in der Bearbeitungsposition 20b und die zweite Nockenkurve 82 vom minimalen radialen Abstand von der Drehachse 18 in der Bearbeitungsposition 20a bis zum maximalen radialen Abstand in der Bearbeitungsposition 20b.

Somit wird beim Weiterdrehen des Drehtisches 14 der Antriebskopf 52 und somit auch der Werkstückträger 16 in gleicher Richtung wie die Drehrichtung des Drehtisches 14 um 90° gedreht, da in der Bearbeitungsposition 20b nun beide Rollen 64 auf der ersten Nockenkurve 80 aufliegen, während nur eine der Rollen 66 an der zweiten Nockenkurve 82 anliegt.

Somit erfolgt bei einer Drehung des Drehtisches 14 um einen dem Winkelabstand zwischen der Bearbeitungsposition 20a und der Bearbeitungsposition 20b entsprechenden Winkel eine Drehung des Werkstückhalters 16 um 90°, woraus sich ein konstantes Übersetzungsverhältnis errechnen läßt, mit welchem der Drehantrieb den Werkstückhalter 16 dreht.

Die Nockenkurven 80 und 82 sind somit in sich jeweils von einer Bearbeitungsposition 20 zur nächsten Bearbeitungsposition 20 erstreckende Winkelsegmente 84 unterteilt, wobei das Übersetzungsverhältnis des Drehantriebs in jedem der Winkelsegmente 84 unterschiedlich groß sein kann.

Als Beispiel hierfür ist in Fig. 6 ein weiteres Winkelsegment 84′ dargestellt, welches ein derartiges Übersetzungsverhältnis aufweist, wobei bei Durchlaufen desselben der Antriebskopf 52 und somit der Werkstückträger 16 eine Drehung um 360° erfahren. Bei diesem Winkelsegment 84 könnte es sich beispielsweise um das Winkelsegment zwischen der Bearbeitungsposition 20f und der Bearbeitungsposition 20a handeln. Die Nockenkurven 80 und 82 haben dabei in den Bearbeitungspositionen 20f und 20a denselben radialen Abstand von der Drehachse 18, d.h., die Nockenkurve 80 hat jeweils den maximalen radialen Abstand und die Nockenkurve 82 den minimalen radialen Abstand, wobei beide Rollen 66 des zweiten Nockenelements 62 auf dieser aufliegen, um eine eindeutige Position des Antriebskopfes 52 festzulegen.

Dazwischen verläuft die erste Nockenkurve 80 bis zu einem minimalen Abstand einem darauffolgenden maximalen radialen Abstand und dann wieder bis zu einem minimalen radialen Abstand von der Drehachse 18, während die zweite Nockenkurve 82 zwischen den Bearbeitungspositionen 20f und 20a bis zu einem maximalen radialen Abstand, an einem minimalen radialen Abstand und einem erneuten maximalen radialen Abstand verläuft. Auch bei dem Winkelsegment 84′ sind die Nockenkurven 80 und 82 so ausgebildet, daß bei minimalem radialem Abstand von der Drehachse 18 jeweils die beiden Rollen 64 bzw. 66 auf dieser anliegen.

Um in den einzelnen Bearbeitungspositionen 20 den Werkstückträger 16 so zu fixieren, daß keine bei einer Bearbeitung des Werkstücks auftretenden Drehkräfte auf den Drehantrieb, d.h. also die Nockenelemente 60 und 62 sowie die Nockenkurven 80 und 82 wirken, ist der Antriebskopf 52 mit einem oberhalb des ersten Nockenelements 60 angeordneten Indexierring 90 versehen, welcher einen Zahnkranz 92 mit beispielsweise 48 Zähnen 94 aufweist. Mit diesen Zähnen 94 des Zahnkranzes 92 sind einer oder mehrere Zähne 96 eines Schwenkriegels 98 in Eingriff bringbar, welcher um eine zur Drehachse 18 parallele Achse 100 am Drehtisch 14 schwenkbar gehalten ist. Der Schwenkriegel 98 erstreckt sich dabei auf einer der Mittelachse 12 zugewandten Seite des Indexierrings 90 und trägt seine Zähne 96 vorzugsweise in einem Schnittpunkt einer Verbindungslinie 102 zwischen der Drehachse 18 und der Mittelachse 12.

In jeder Bearbeitungsstation 20 ist ein Betätigungsbolzen 104 vorgesehen, welcher koaxial zu der Verbindungslinie 102 zwischen der Mittelachse 12 und der Drehachse 18 eines in dieser Bearbeitungsstation 20 stehenden Werkstückträgers 16 am Maschinengestell 10 angeordnet und längs dieser Achse, beispielsweise hydraulisch, bewegbar ist. Der Betätigungsbolzen 104 läßt dabei in seiner zurückgezogenen Position den Schwenkriegel 98 frei passieren, so daß dieser mit seinen Zähnen 96 außer Eingriff mit den Zähnen 94 des Zahnkranzes 92 ist, in seiner vorgeschobenen Position drückt er jedoch die Zähne 96 in die Zähne 94 des Zahnkranzes 92 und führt somit zu einer sämtliche vom Werkstückträger aufzunehmenden Bearbeitungskräfte abfangenden Fixierung des jeweiligen Werkstückträgers 16.

Der Schwenkriegel 98 ist außerdem mit einem Rastriegel 106 verbunden, welcher eine Rastnase 108 trägt, welche ebenfalls mit den Zähnen 94 des Zahnkranzes 92 in Eingriff bringbar ist. Der Rastriegel 106 erstreckt sich vorzugsweise in einer Richtung ungefähr senkrecht zum Schwenkriegel 98 und somit ungefähr in radialer Richtung zur Mittelachse 12 seitlich des Indexierrings 90, so daß die Rastnase 108 bezogen auf die Mittelachse 12 in tangentialer Richtung und ungefähr in einer Entfernung von der Mittelachse 12, welche dem Abstand der Drehachse 18 von der Mittelachse 12 entspricht, in den Zahnkranz 92 eingreift. Die Rastnase 108 ist dabei abgerundet, so daß sie lediglich den Werkstückträger 16 in der Drehstellung vorfixiert, in welche er von dem Drehantrieb, bestehend aus den Nockenelementen 60 und 62 sowie den Nockenkurven 80 und 82, gebracht ist.

Um die Rastnase 108 ständig in Eingriff zu halten, ist im Bereich der gemeinsamen drehbaren Lagerung des Schwenkriegels 98 und des damit verbundenen Rastriegels 106 eine Feder 110 vorgesehen, welche sich einerseits an einer Unterseite des Drehtisches 14 und nach einer Umschlingung der drehbaren Lagerung von Schwenkriegel 98 und Rastriegel 106 am Schwenkriegel 98 abstützt und damit den Schwenkriegel 98 in Richtung zur Mittelachse 12 hin und den Rastriegel 98 in Richtung zum Zahnkranz 92 beaufschlagt, so daß durch die Wirkung der Feder 110 die Rastnase 108 ständig in Eingriff mit dem Zahnkranz 92 gehalten ist.

Lediglich dann, wenn der Betätigungsbolzen 104 in der jeweiligen Bearbeitungsstation 20 den Schwenkriegel 98 beaufschlagt und somit dessen Zähne 96 mit den Zähnen 94 des Zahnkranzes 92 in Eingriff bringt, wird der Rastriegel mit seiner Rastnase 108 außer Eingriff mit dem Zahnkranz 92 geschwenkt, so daß der Werkstückträger 16 lediglich durch die Zähne 96 des Schwenkriegels 98 exakt positioniert ist.

Die Fixierung des Werkstückträgers 16 mittels des Indexierrings und das Lösen derselben erfolgt nun in Zusammenarbeit mit dem Drehantrieb für den Werkstückträger 16 derart, daß bei in einer Bearbeitungsstation stehendem Werkstückträger 16 zunächst eine vollständige Fixierung desselben durch Beaufschlagung des Schwenkriegels 98 mittels des Betätigungsbolzens 104 in Richtung des Zahnkranzes 92 erfolgt, und somit der Werkstückträger in der Lage ist, sämtliche Bearbeitungskräfte aufzunehmen. Kurz vor einem Weiterdrehen des Drehtisches wird der Betätigungsbolzen 104 in seine zurückgezogene Stellung gefahren, so daß der Schwenkriegel 98 unter Wirkung der Feder 110 mit seinen Zähnen 96 außer Eingriff mit dem Zahnkranz 92 kommt und der Zahnkranz 92 lediglich durch die wieder mit diesem in Eingriff kommende Rastnase 108 vorfixiert gehalten ist. Während des Weiterdrehens des Drehtisches 14 erfolgt ein Drehantrieb des Werkstückträgers 16 durch die Nockenelemente 60 und 62 in Zusammenwirkung mit den Nockenkurven 80 und 82, wobei die Rastnase 108 aufgrund ihrer Form außer Eingriff mit dem Zahnkranz 92 gedrückt wird und sich somit der Werkstückträger 16 entsprechend dem durch den Drehantrieb vorgegebenen Winkel weiterdreht. Nach Erreichen der nächsten Bearbeitungsstation erfolgt wiederum eine exakte Fixierung des Werkstückträgers 16 mittels des Schwenkriegels 98,wobei die Rastnase 108 wieder mit dem Zahnkranz 92 außer Eingriff kommt.

Die Rastnase 108 hat primär die Aufgabe, als Vorfixierung für den Schwenkriegel 98 zu dienen. Darüberhinaus bietet das Vorsehen der Rastnase 108 aber auch die Möglichkeit, dann, wenn von einer Bearbeitungsstation 20 zur nächsten keine Drehung des Werkstückträgers 16 notwendig ist, in diesem Winkelsegment 84 keine Nockenkurven 80 und 82 vorzusehen, so daß der Werkstückträger 16 während der Verschwenkung des Drehtisches um dieses Winkelsegment lediglich von der Rastnase 108 in Zusammenarbeit mit dem Zahnkranz 92 fixiert gehalten ist.

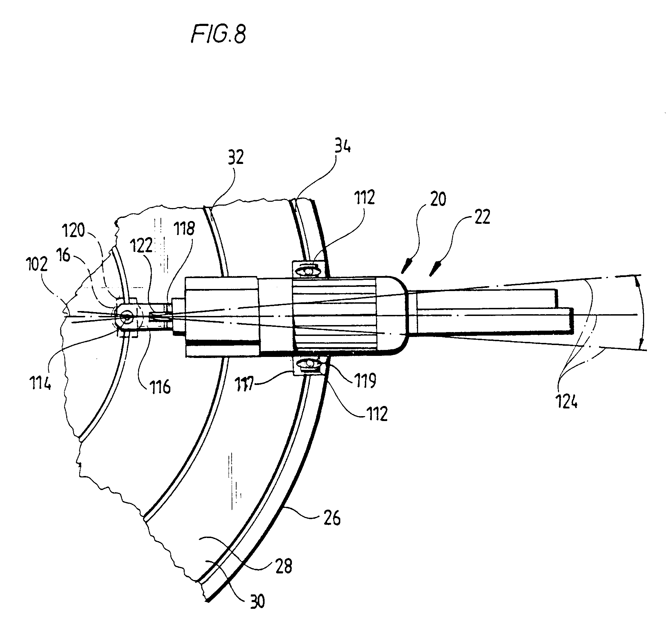

Wie insbesondere aus Fig. 4 und Fig. 8 zu ersehen, ist die erfindungsgemäße Werkzeugmaschine auch noch dadurch gekennzeichnet, daß die Bearbeitungseinrichtung 22 auf dem Befestigungsbett 28 fixierbar ist. Diese Fixierung erfolgt vorzugsweise durch in T-Nuten 32 und 34 eingreifende Nutensteine, mit welchen sich an den Bearbeitungseinrichtungen 22 angreifende Befestigungseinrichtungen 112 fixieren lassen.

Darüberhinaus ist jede Befestigungseinrichtung mit einem Drehbolzen 114 schwenkbar am Maschinengestell 10 fixiert, wobei der Drehbolzen 114 koaxial zur Drehachse 18 unterhalb des Antriebskopfes 52 angeordnet ist.

An diesem Drehbolzen 114 ist eine Führungstraverse 116 drehbar gelagert, welche sich von dem jeweiligen Drehbolzen 114 zu einer Trägereinheit 118 der jeweiligen Bearbeitungseinrichtung 22 erstreckt, wobei die Trägereinheit 118 ihrerseits zusätzlich noch durch die Befestigungseinrichtungen 112 z.B. in Form von Nutensteinen an dem Befestigungsbett 28 fixierbar ist. Um ein Verschwenken und Fixieren der Bearbeitungseinrichtung 22 in jeder Schwenkstellung zu ermöglichen, ist die Trägereinheit 118 mit Seitenflanschen 117 versehen, welche Langlöcher 119 aufweisen. Vorzugsweise ist die Fixierung der Trägereinheit 118 mit den Befestigungseinrichtungen 112 am Befestigungsbett 28 so ausgebildet, daß eine Verschwenkung der Bearbeitungseinrichtung 22 um 4° zu jeweiligen Fortsetzung der Verbindungslinie 102 zwischen der Mittelachse 12 und der in der jeweiligen Bearbeitungsstation stehenden Drehachse 118 möglich ist.

Durch die Einteilung des Zahnkranzes 92 in 48 Zähne 94 ist bereits durch den Indexierring 90 ein Winkelinkrement von 7,5° vorgegeben, welches die kleinste Einheit eines Drehwinkels darstellt, um welchen der Werkstückträger drehbar ist. In Kombination mit der Möglichkeit, auch noch die Bearbeitungseinrichtung 22 mit den Befestigungseinrichtungen 112 um ± 4° um die Drehachse 18 schwenkbar zu gestalten, bietet die erfindungsgemäße Werkzeugmaschine die Möglichkeit, ein in den Werkzeugträger 16 gespanntes und in Fig. 8 gestrichelt angedeutetes Werkstück 120 relativ zu einer Arbeitsachse 124, welche in radialer Richtung zu der Drehachse 18 des in der jeweiligen Bearbeitungsstation 20 stehende Werkzeugträgers verläuft und längs welcher ein Werkzeug 122 der jeweiligen Bearbeitungseinrichtung 22 bewegbar ist, in beliebigen Winkeln zwischen 0° und 360° in der jeweiligen Bearbeitungsstation 20 orientieren zu können.

Bei einer weiteren Variante einer Bearbeitungseinrichtung 22′ der erfindungsgemäßen Werkzeugmaschine ist die Trägereinheit 118′ auch noch in einer senkrecht auf der Bettebene 30 stehenden Ebene 126 verschwenkbar, und zwar so, daß die Arbeitsachse 124′ um einen im Werkstück 122 liegenden Mittelpunkt 128 verschwenkbar ist.

Zur Steigerung der Stabilität der Abstützung der Werkstückträger 16 ist der Antriebskopf 52 auf seiner unteren, dem Drehtisch 14 abgewandten Seite mit einer radial über die Nockenelemente 60 und 62 überstehenden Stützscheibe 130 versehen, welche, sofern erforderlich, in der jeweiligen Bearbeitungsstation 20 durch einen Stützamboß 132 durch Aufliegen auf demselben abgestützt ist. Dieser Stützamboß 132 kann einerseits am Maschinengestell 10 angeordnet sein. Bevorzugterweise ist der Stützamboß, wie in Fig. 4 dargestellt, auf der Führungstraverse 116 ruhend angeordnet. Bei einem Weiterschalten des Drehtisches verläßt die Stützscheibe 130 den in der vorhergehenden Bearbeitungsstation angeordneten Stützamboß 132 und fährt bei Erreichen der nächsten Bearbeitungsstation wieder in den in dieser angeordneten Stützamboß 132 ein. Damit ist bei großen, auf den Werkstückträger 16 wirkenden Kräften eine zusätzliche Abstützung des Werkstückträgers 16 erreicht, so daß sich auch bei diesen großen Kräften der Drehtisch 14 nicht nach unten biegt, sondern diese sehr großen Kräfte durch die Stützscheibe und den Stützamboß 132 abgefangen werden.

## Patentansprüche

1. Werkzeugmaschine mit einem Maschinengestell (10), mit einem um eine Mittelachse (12) drehbar am Maschinengestell (10) gelagerten Drehtisch (14), mit um den Drehtisch herum im Winkelabstand angeordneten Bearbeitungsstationen (20a - 20f), mit mindestens einer am Drehtisch um eine Drehachse drehbar gelagerten Halteeinrichtung (16), welche durch Drehen des Drehtisches (14) in die Bearbeitungsstationen bringbar ist, und mit einem Drehantrieb zum Verdrehen der Halteeinrichtung (16) in verschiedene Drehstellungen,
**dadurch gekennzeichnet,**
daß der Drehantrieb eine erste (80) und eine zweite (82) stationär am Maschinengestell (10) gehaltene Nockenkurve sowie ein erstes (60) und ein zweites (62) am Drehtisch (14) gelagertes und sich bei dessen Drehung längs der Nockenkurve (80, 82) bewegendes Nockenelement umfaßt, daß jeweils die erste Nockenkurve (80) in einer ersten Fläche und die zweite Nockenkurve (82) in einer zweiten Fläche liegen, daß die erste Nockenkurve (80) mit einer ersten Nockenfläche (74) des ersten Nockenelements (60) sowie die zweite Nockenkurve (82) mit einer zweiten Nockenfläche (76) des zweiten Nockenelements (62) in ständigem Kontakt miteinander zusammenwirken, daß das erste und das zweite Nockenelement (60, 62) zum Drehen der Halteeinrichtung (16) gekoppelt sind und diese in jeder ihrer Positionen längs der Nockenkurven (80, 82) in einer eindeutig definierten Drehstellung halten, und daß die Nockenelemente (60, 62) und die Nockenkurven (80, 82) so angeordnet sind, daß ein Zugriff des einen Nockenelements (60, 62) zu dessen Nockenkurve (80, 82) berührungsfrei mit der Nockenkurve (82, 80) des anderen Nockenelements (62, 60) oder mit dessen Zugriff zu dieser Nockenkurve (82, 80) erfolgt.

2. Werkzeugmaschine nach Anspruch 1, dadurch gekennzeichnet, daß die erste und die zweite Fläche parallel zueinander verlaufen.

3. Werkzeugmaschine nach Anspruch 1 oder 2, dadurch gekennzeichnet, daß sich das erste und das zweite Nockenelement um senkrecht auf der ersten bzw. zweiten Fläche stehende Achsen drehen.

4. Werkzeugmaschine nach Anspruch 3, dadurch gekennzeichnet, daß die Achse eine mehrzählige Rotationssymmetrieachse für das jeweilige Nockenelement (60, 62) ist.

5. Werkzeugmaschine nach Anspruch 4, dadurch gekennzeichnet, daß die Achse eine zweizählige Rotationssymmetrieachse für das jeweilige Nockenelement (60, 62) ist.

6. Werkzeugmaschine nach Anspruch 4 oder 5, dadurch gekennzeichnet, daß das erste und das zweite Nockenelement (60, 62) identische Symmetrieeigenschaften aufweisen.

7. Werkzeugmaschine nach einem der voranstehenden Ansprüche, dadurch gekennzeichnet, daß die Nockenelemente (60, 62) auf einem einzigen Antriebsteil (72) des Drehantriebs sitzen.

8. Werkzeugmaschine nach Anspruch 7, dadurch gekennzeichnet, daß die Nockenelemente (60, 62) in axialer Richtung des Antriebsteils (72) im Abstand voneinander angeordnet sind.

9. Werkzeugmaschine nach Anspruch 7 oder 8, dadurch gekennzeichnet, daß die Nockenelemente (60, 62) gegeneinander versetzt an dem Antriebsteil (72) gehalten sind.

10. Werkzeugmaschine nach einem der voranstehenden Ansprüche, dadurch gekennzeichnet, daß die Nockenelemente (60, 62) mit Rollen (64, 66) auf den diesen jeweils zugeordneten Nockenkurven (80, 82) laufen.

11. Werkzeugmaschine nach einem der voranstehenden Ansprüche, dadurch gekennzeichnet, daß die Nockenkurven (80, 82) konzentrisch um die Mittelachse (12) herum verlaufen.

12. Werkzeugmaschine nach einem der voranstehenden Ansprüche, dadurch gekennzeichnet, daß die Nockenkurven (80, 82)in von einer Bearbeitungsstation (20) zur nächsten Bearbeitungsstation (20) reichende Winkelsegmente (84) unterteilt sind.

13. Werkzeugmaschine nach Anspruch 12, dadurch gekennzeichnet, daß die Nockenelemente (60, 62) beim Durchlaufen unterschiedlicher Winkelsegmente (84, 84′) die Halteeinrichtung (16) um unterschiedliche Drehwinkel drehen.

14. Werkzeugmaschine nach Anspruch 12 oder 13, dadurch gekennzeichnet, daß die Nockenelemente (60, 62) die Halteeinrichtung bei Durchlaufen eines Winkelsegments (84) um ein N-Faches eines Winkelinkrements drehen.

15. Werkzeugmaschine nach einem der Ansprüche 12 bis 14, dadurch gekennzeichnet, daß die Nockenkurven (80, 82) so ausgebildet sind, daß die Nockenelemente (60, 62) die Halteeinrichtung während des gesamten Durchlaufens eines Winkelsegments (84, 84′) drehen.

16. Werkzeugmaschine nach Anspruch 15, dadurch gekennzeichnet, daß der Drehantrieb während des Durchlaufens jedes Winkelsegments (84, 84′) ein konstantes Übersetzungsverhältnis zwischen einer Drehung des Drehtisches (14) und der Halteeinrichtung (16) herstellt.

17. Werkzeugmaschine nach einem der voranstehenden Ansprüche, dadurch gekennzeichnet, daß die Nockenelemente (60, 62) so ausgebildet sind, daß bei entsprechend ausgebildeten Nockenkurven (80, 82) eine Drehung der Halteeinrichtung (16) im Bereich von 0° bis mindestens 360° möglich ist.

18. Werkzeugmaschine nach einem der voranstehenden Ansprüche, dadurch gekennzeichnet, daß die Nockenkurven (80, 82) auswechselbar am Maschinengestell (10) gehalten sind.

19. Werkzeugmaschine nach Anspruch 18, dadurch gekennzeichnet, daß die erste und die zweite Nockenkurve (80, 82) einzeln am Maschinengestell (10) gehalten sind.

20. Werkzeugmaschine nach einem der Ansprüche 12 bis 19, dadurch gekennzeichnet, daß die Nockenkurven (80, 82) in den Winkelsegmenten (84, 84′) entsprechende Kurvensegmente unterteilt sind.

21. Werkzeugmaschine nach einem der voranstehenden Ansprüche, dadurch gekennzeichnet, daß die Halteeinrichtung (16) mit einer Indexiervorrichtung (90, 98, 106) versehen ist.

22. Werkzeugmaschine nach Anspruch 21, dadurch gekennzeichnet, daß die Indexiervorrichtung einen mit der Haltevorrichtung (16) drehfest verbundenen Indexierring (90) aufweist, welcher mit einer am Drehtisch (14) gehaltenen Indexierverrastung (106) zusammenwirkt.

23. Werkzeugmaschine nach Anspruch 22, dadurch gekennzeichnet, daß die Indexierverrastung ein Hebel (106) mit einer in den Indexierring (90) federbeaufschlagt eingreifenden Rastnase (108) ist.

24. Werkzeugmaschine nach Anspruch 23, dadurch gekennzeichnet, daß die Rastnase (108) eine Vorfixierung der Haltevorrichtung (16) bewirkt.

25. Werkzeugmaschine nach einem der Ansprüche 21 bis 24, dadurch gekennzeichnet, daß die Indexiervorrichtung eine Genaupositionierung (98) der Haltevorrichtung (16) in den Bearbeitungsstationen (20) aufweist.

26. Werkzeugmaschine nach Anspruch 25, dadurch gekennzeichnet, daß die Genaupositionierung (98) Positionierklauen (96) umfaßt, welche mit dem Indexierring (90) in Eingriff bringbar sind.

27. Werkzeugmaschine nach Anspruch 26, dadurch gekennzeichnet, daß die Positionierklauen (96) maschinengesteuert mit dem Indexierring (90) in Eingriff bringbar sind.

28. Werkzeugmaschine nach Anspruch 27, dadurch gekennzeichnet, daß die Positionierklauen (96) durch eine am Maschinengestell fest angeordnete Betätigungseinrichtung (106) mit dem Indexierring (90) in Eingriff bringbar sind.

29. Werkzeugmaschine nach Anspruch 28, dadurch gekennzeichnet, daß jeder Bearbeitungsstation (20) eine Betätigungseinrichtung (106) für die Genaupositionierung zugeordnet ist.

30. Werkzeugmaschine nach einem der Ansprüche 26 bis 29, dadurch gekennzeichnet, daß die Positionierklauen (96) an dem die Rastnase (108) tragenden Hebel (98, 106) angeordnet sind.

31. Werkzeugmaschine nach einem der Ansprüche 26 bis 30, dadurch gekennzeichnet, daß entweder die Rastnase (108) oder die Positionierklauen (96) mit dem Indexierring (90) in Eingriff bringbar sind.

32. Werkzeugmaschine nach einem der voranstehenden Ansprüche, dadurch gekennzeichnet, daß in den Bearbeitungsstationen (20) Bearbeitungseinrichtungen angeordnet sind.

33. Werkzeugmaschine nach Anspruch 32, dadurch gekennzeichnet, daß die Bearbeitungseinrichtungen (22) um die Drehachse (18) der in der jeweiligen Bearbeitungsstation (20) stehenden Halteeinrichtung (16) verschwenkbar am Maschinengestell (10) angeordnet sind.

34. Werkzeugmaschine nach Anspruch 33, dadurch gekennzeichnet, daß die Bearbeitungseinrichtung (22) eine Arbeitsachse (124) aufweist, die parallel zu einer radialen Richtung zur Drehachse (18) der in der jeweiligen Bearbeitungsstation (20) stehenden Halteeinrichtung (16) verläuft.

35. Werkzeugmaschine nach Anspruch 34, dadurch gekennzeichnet, daß die Arbeitsachse (124) in radialer Richtung zur Drehachse (18) der in der jeweiligen Bearbeitungsstation (20) stehenden Halteeinrichtung (16) verläuft.

36. Werkzeugmaschine nach einem der Ansprüche 33 bis 35, dadurch gekennzeichnet, daß die Bearbeitungseinrichtung (22) mit einem koaxial zur Drehachse (18) der in der jeweiligen Bearbeitungsstation (20) stehenden Halteeinrichtung (16) angeordneten Drehlager (114) am Maschinengestell (10) gehalten ist.

37. Werkzeugmaschine nach einem der Ansprüche 32 bis 36, dadurch gekennzeichnet, daß die Bearbeitungseinrichtung (22) auf einem radial außenliegend zum Drehtisch (14) angeordneten Befestigungsbett (28) aufsitzt.

38. Werkzeugmaschine nach Anspruch 37, dadurch gekennzeichnet, daß das Befestigungsbett (28) eine quer zur Drehachse (18) der in der jeweiligen Bearbeitungsstation (20) stehenden Halteeinrichtung (16) ausgerichtete Bettebene (30) aufweist.

## Claims

1. Machine tool comprising a machine frame (10), a rotary table (14) mounted on the machine frame (10) for rotation about a central axis (12), machining stations (20a - 20f) arranged in angular spaced relation around the rotary table, at least one holding device (16) mounted on the rotary table for rotation about an axis of rotation, said holding device adapted to be brought into the machining stations by rotation of the rotary table (14), and a rotary drive for rotating the holding device (16) into various rotary positions, characterized in that the rotary drive comprises a first cam track (80) and a second cam track (82) held stationarily on the machine frame (10) as well as a first cam element (60) and a second cam element (62) mounted on the rotary table (14) and moving along the cam track (80, 82) when the rotary table rotates, that the first cam track (80) is located in a first surface and the second cam track (82) in a second surface, that the first cam track (80) cooperates with a first cam surface (74) of the first cam element (60) and the second cam track (82) with a second cam surface (76) of the second cam element (62) in constant contact with one another, that the first and the second cam elements (60, 62) are coupled for rotating the holding device (16) and in each of their positions along the cam tracks (80, 82) hold the holding device in a clearly defined rotary position, and that the cam elements (60, 62) and the cam tracks (80, 82) are arranged such that the one cam element (60, 62) has access to its cam track (80, 82) without coming into contact with the cam track (82, 80) of the other cam element (62, 60) or with its access to this cam track (82, 80).

2. Machine tool as defined in claim 1, characterized in that the first and second surfaces extend parallel to one another.

3. Machine tool as defined in claim 1 or 2, characterized in that the first and second cam elements rotate about axes perpendicular to the first and second surfaces, respectively.

4. Machine tool as defined in claim 3, characterized in that the axis is an axis of multiple rotational symmetry for the respective cam element (60, 62).

5. Machine tool as defined in claim 4, characterized in that the axis is an axis of twofold rotational symmetry for the respective cam element (60, 62).

6. Machine tool as defined in claim 4 or 5, characterized in that the first and second cam elements (60, 62) have identical symmetry characteristics.

7. Machine tool as defined in any of the preceding claims, characterized in that the cam elements (60, 62) are seated on a single drive member (72) of the rotary drive.

8. Machine tool as defined in claim 7, characterized in that the cam elements (60, 62) are arranged in spaced relation to one another in axial direction of the drive member (72).

9. Machine tool as defined in claim 7 or 8, characterized in that the cam elements (60, 62) are held on the drive member (72) in offset relation to one another.

10. Machine tool as defined in any of the preceding claims, characterized in that the cam elements (60, 62) run with rollers (64, 66) on the cam tracks (80, 82) respectively associated with them.

11. Machine tool as defined in any of the preceding claims, characterized in that the cam tracks (80, 82) extend concentrically around the central axis (12).

12. Machine tool as defined in any of the preceding claims, characterized in that the cam tracks (80, 82) are divided into angular segments (84) reaching from one machining station (20) to the next machining station (20).

13. Machine tool as defined in claim 12, characterized in that while traversing different angular segments (84, 84') the cam elements (60, 62) rotate the holding device (16) through different angles of rotation.

14. Machine tool as defined in claim 12 or 13, characterized in that while traversing an angular segment (84) the cam elements (60, 62) rotate the holding device through N times an angular increment.

15. Machine tool as defined in any of claims 12 to 14, characterized in that the cam tracks (80, 82) are designed such that the cam elements (60, 62) rotate the holding device during the entire traversing of an angular segment (84, 84').

16. Machine tool as defined in claim 15, characterized in that during the traversing of each angular segment (84, 84') the rotary drive establishes a constant transmission ratio between a rotation of the rotary table (14) and of the holding device (16).

17. Machine tool as defined in any of the preceding claims, characterized in that the cam elements (60, 62) are designed such that when the cam tracks (80, 82) are designed accordingly a rotation of the holding device (16) is possible in the range of 0° to at least 360°.

18. Machine tool as defined in any of the preceding claims, characterized in that the cam tracks (80, 82) are interchangeably held on the machine frame (10).

19. Machine tool as defined in claim 18, characterized in that the first and second cam tracks (80, 82) are held individually on the machine frame (10).

20. Machine tool as defined in any of claims 12 to 19, characterized in that the cam tracks (80, 82) are divided into track segments corresponding to the angular segments (84, 84').

21. Machine tool as defined in any of the preceding claims, characterized in that the holding device (16) is provided with an indexing device (90, 98, 106).

22. Machine tool as defined in claim 21, characterized in that the indexing device has an indexing ring (90) non-rotatably connected to the holding device (16) and cooperating with an indexing catch means (106) held on the rotary table (14).

23. Machine tool as defined in claim 22, characterized in that the indexing catch means is a lever (106) with a detent nose (108) acted upon by a spring to engage in the indexing ring (90).

24. Machine tool as defined in claim 23, characterized in that the detent nose (108) effects a preliminary fixing in position of the holding device (16).

25. Machine tool as defined in any of claims 21 to 24, characterized in that the indexing device has a means (98) for exactly positioning the holding device (16) in the machining stations (20).

26. Machine tool as defined in claim 25, characterized in that the exact positioning means (98) comprises positioning claws (96) adapted to be brought into engagement with the indexing ring (90).

27. Machine tool as defined in claim 26, characterized in that the positioning claws (96) are adapted to be brought into engagement with the indexing ring (90) in a machine-controlled manner.

28. Machine tool as defined in claim 27, characterized in that the positioning claws (96) are adapted to be brought into engagement with the indexing ring (90) by an actuating device (106) securely arranged on the machine frame.

29. Machine tool as defined in claim 28, characterized in that an actuating device (106) for the exact positioning means is associated with each machining station (20).

30. Machine tool as defined in any of claims 26 to 29, characterized in that the positioning claws (96) are arranged on the lever (98, 106) bearing the detent nose (108).

31. Machine tool as defined in any of claims 26 to 30, characterized in that either the detent nose (108) or the positioning claws (96) are adapted to be brought into engagement with the indexing ring (90).

32. Machine tool as defined in any of the preceding claims, characterized in that machining devices are arranged in the machining stations (20).

33. Machine tool as defined in claim 32, characterized in that the machining devices (22) are arranged on the machine frame (10) for pivoting about the axis of rotation (18) of the holding device (16) located in the respective machining station (20).

34. Machine tool as defined in claim 33, characterized in that the machining device (22) has a work axis (124) extending parallel to a radial direction in relation to the axis of rotation (18) of the holding device (16) located in the respective machining station (20).

35. Machine tool as defined in claim 34, characterized in that the work axis (124) extends in radial direction in relation to the axis of rotation (18) of the holding device (16) located in the respective machining station (20).

36. Machine tool as defined in any of claims 33 to 35, characterized in that the machining device (22) is held on the machine frame (10) with a rotary bearing (114) arranged coaxially to the axis of rotation (18) of the holding device (16) located in the respective machining station (20).

37. Machine tool as defined in any of claims 32 to 36, characterized in that the machining device (22) is seated on an attachment bed (28) arranged radially outwards in relation to the rotary table (14).

38. Machine tool as defined in claim 37, characterized in that the attachment bed (28) has a bed plane (30) aligned transversely to the axis of rotation (18) of the holding device (16) located in the respective machining station (20).

## Revendications

1. Machine-outil comportant un bâti (10), comportant une table tournante (14) montée de manière à pouvoir tourner autour d'un axe médian (12) sur le bâti (10), comportant des postes d'usinage (20a à 20f), disposés autour de la table tournante, à une distance angulaire, comportant au moins un dispositif de fixation (16) monté sur la table tournante de manière à pouvoir tourner autour d'un axe de rotation, lequel dispositif de fixation peut être amené par rotation de la table tournante (14) dans les postes d'usinage, et comportant un mécanisme d'entraînement en rotation pour la mise en rotation du dispositif de fixation (16) dans différentes positions, caractérisée en ce que le mécanisme d'entraînement en rotation comporte une première (80) et une deuxième (82) courbes de came maintenues fixes sur le bâti (10) de la machine ainsi qu'un premier élément à cames (60) et un deuxième élément à cames (62) montés sur la table tournante (14) et se déplaçant, lors de sa rotation, le long de la courbe de came (80, 82), en ce que chaque fois la première courbe de came (80) se situe dans une première surface et la deuxième courbe de came (82) dans une deuxième surface, en ce que la première courbe de came (80) coopère avec une première surface de came (74) du premier élément à cames (60) ainsi que la deuxième courbe de came (82) avec une deuxième surface de came (76) du deuxième élément à cames (62), en contact permanent entre elles, en ce que le premier et le deuxième éléments à cames (60, 62) sont accouplés en vue de la rotation du dispositif de fixation (16) et maintiennent celui-ci dans chacune de ses positions le long des courbe de came (80, 82), dans une position de rotation clairement définie, et en ce que les éléments à cames (60, 62) et les courbes de came (80, 82) sont disposés de manière qu'un accès d'un élément à cames (60, 62) à sa courbe de came (80, 82) s'effectue sans contact avec la courbe de came (82, 80) de l'autre élément à cames (62, 60) ou avec son accès à cette courbe de came (82, 80).

2. Machine-outil selon la revendication 1, caractérisée en ce que la première et la deuxième surfaces sont parallèles entre elles.

3. Machine-outil selon les revendications 1 ou 2, caractérisée en ce que le premier et le deuxième éléments à cames tournent autour d'axes perpendiculaires à la première ou à la deuxième surface.

4. Machine-outil selon la revendication 3, caractérisée en ce que l'axe est un axe de symétrie de rotation multiple pour l'élément à cames (60, 62) respectif.

5. Machine-outil selon la revendication 4, caractérisée en ce que l'axe est un axe de symétrie de rotation double pour l'élément à cames (60, 62) respectif.

6. Machine-outil selon les revendications 4 ou 5, caractérisée en ce que le premier et le deuxième éléments à cames (60, 62) ont des caractéristiques de symétrie identiques.

7. Machine-outil selon l'une des revendications précédentes, caractérisée en ce que les éléments à cames (60, 62) se trouvent sur un même élément d'entraînement (72) du mécanisme d'entraînement en rotation.

8. Machine-outil selon la revendication 7, caractérisée en ce que les éléments à cames (60, 62) sont espacés l'un de l'autre dans la direction axiale de l'élément d'entraînement (72).

9. Machine-outil selon les revendications 7 ou 8, caractérisée en ce que les éléments à cames (60, 62) sont maintenus décalés l'un par rapport à l'autre sur l'élément d'entraînement (72).

10. Machine-outil selon l'une des revendications précédentes, caractérisée en ce que les éléments à cames (60, 62) roulent avec des galets (64, 66) sur les courbes de came (80, 82) associées à ceux-ci.

11. Machine-outil selon l'une des revendications précédentes, caractérisée en ce que les courbe de came (80, 82) sont concentriques autour de l'axe médian (12).

12. Machine-outil selon l'une des revendications précédentes, caractérisée en ce que les courbe de came (80, 82) sont subdivisées en segments angulaires (84) s'étendant d'un poste d'usinage (20) au poste d'usinage (20) suivant.

13. Machine-outil selon la revendication 12, caractérisée en ce que les éléments à cames (60, 62) en traversant différents segments angulaires (84, 84'), font tourner le dispositif de fixation (16) d'angles de rotation différents.

14. Machine-outil selon les revendications 12 ou 13, caractérisée en ce que les éléments à cames (60, 62) font tourner le dispositif de fixation en traversant un segment angulaire (84) de N fois un incrément angulaire.

15. Machine-outil selon l'une des revendications 12 ou 14, caractérisée en ce que les courbe de came (80, 82) sont conçues de manière que les éléments à cames (60, 62) fassent tourner le dispositif de fixation pendant toute la traversée d'un segment angulaire (84, 84').

16. Machine-outil selon la revendication 15, caractérisée en ce que le mécanisme d'entraînement en rotation pendant la traversée de chaque segment angulaire (84, 84') réalise un rapport de transmission constant entre une rotation de la table de rotation (14) et du dispositif de fixation (16).

17. Machine-outil selon l'une des revendications précédentes, caractérisée en ce que les éléments à cames (60, 62) sont conçus de manière qu'avec des courbes de came (80, 82) conçues en conséquence, une rotation du dispositif de fixation (16) soit possible entre 0° et au moins 360°.

18. Machine-outil selon l'une des revendications précédentes, caractérisée en ce que les courbe de came (80, 82) sont fixées de manière interchangeable sur le bâti (10) de la machine.

19. Machine-outil selon la revendication 18, caractérisée en ce que la première et la deuxième courbes de came (80, 82) sont maintenues séparément sur le bâti (10) de la machine.

20. Machine-outil selon l'une des revendications 12 à 19, caractérisée en ce que les courbe de came (80, 82) sont subdivisées dans des segments de courbe correspondant aux segments angulaires (84, 84').

21. Machine-outil selon l'une des revendications précédentes, caractérisée en ce que le dispositif de fixation (16) est pourvu d'un dispositif d'indexation (90, 98, 106).

22. Machine-outil selon la revendication 21, caractérisée en ce que le dispositif d'indexation comporte un anneau d'indexation (90) relié solidaire en rotation au dispositif de fixation (16), lequel anneau coopère avec un organe d'accrochage d'indexation (106) maintenu sur la table tournante (14).

23. Machine-outil selon la revendication 22, caractérisée en ce que l'organe d'accrochage d'indexation est un levier (106) avec un ergot d'arrêt (108) s'engageant, sous l'action d'un ressort, dans l'anneau d'indexation (90).

24. Machine-outil selon la revendication 23, caractérisée en ce que l'ergot d'arrêt (108) entraîne une préfixation du dispositif de fixation (16).

25. Machine-outil selon l'une des revendications 21 à 24, caractérisée en ce que le dispositif d'indexation comporte un positionnement précis (98) du dispositif de fixation (16) dans les postes d'usinage (20).

26. Machine-outil selon la revendication 25, caractérisée en ce que le positionnement précis (98) comprend des griffes de positionnement (96) qui peuvent être amenées en prise avec l'anneau d'indexation (90).

27. Machine-outil selon la revendication 26, caractérisée en ce que les griffes de positionnement (96) peuvent être amenées en prise avec l'anneau d'indexation (90), commandées par la machine.

28. Machine-outil selon la revendication 27, caractérisée en ce que les griffes de positionnement peuvent être amenées en prise avec l'anneau d'indexation (90), par un dispositif d'actionnement (106) monté fixe sur le bâti de la machine.

29. Machine-outil selon la revendication 28, caractérisée en ce qu'un dispositif d'actionnement (106) est associé à chaque poste d'usinage (20) pour le positionnement précis.

30. Machine-outil selon l'une des revendications 26 à 29, caractérisée en ce que les griffes de positionnement (96) sont montées sur le levier (98, 106), portant l'ergot d'arrêt (108).

31. Machine-outil selon l'une des revendications 26 à 30, caractérisée en ce que soit l'ergot d'arrêt (108) soit les griffes de positionnement (96) peuvent être amenées en prise avec l'anneau d'indexation (90).

32. Machine-outil selon l'une des revendications précédentes, caractérisée en ce que des dispositifs d'usinage sont montés dans les postes d'usinage (20).

33. Machine-outil selon la revendication 32, caractérisée en ce que les dispositifs d'usinage (22) sont montés sur le bâti (10) de la machine de manière à pouvoir pivoter autour de l'axe de rotation (18) du dispositif de fixation (16), se trouvant dans le poste d'usinage (20) respectif.

34. Machine-outil selon la revendication 33, caractérisée en ce que le dispositif d'usinage (22) comporte un axe de travail (124), qui est parallèle à une direction radiale à l'axe de rotation (18) du dispositif de fixation (16), se trouvant dans le poste d'usinage (20) respectif.

35. Machine-outil selon la revendication 34, caractérisée en ce que l'axe de travail (124) s'étend dans une direction radiale à l'axe de rotation (18) du dispositif de fixation (16), se trouvant dans le poste d'usinage (20) respectif.

36. Machine-outil selon l'une des revendications 33 à 35, caractérisée en ce que le dispositif d'usinage (22) est maintenu sur le bâti (10) de la machine avec un palier de rotation (114) placé coaxialement à l'axe de rotation (18) du dispositif de fixation (16), se trouvant dans le poste d'usinage (20) respectif.

37. Machine-outil selon l'une des revendications 32 à 36, caractérisée en ce que le dispositif d'usinage (22) repose sur un lit de fixation (28) situé radialement à l'extérieur de la table de rotation (14).

38. Machine-outil selon la revendication 37, caractérisée en ce que le lit de fixation (28) présente un plan (30) orienté transversalement à l'axe de rotation (18) du dispositif de fixation (16), se trouvant dans le poste d'usinage (20) respectif.
